# EUROPEAN PATENT SPECIFICATION

(11) **EP 4 659 064 B1**
(45) Date of publication and mention of the grant of the patent: **25.11.2026**
(21) Application number: 23715625.2
(22) Date of filing: 02.03.2023
(51) Int. Cl.: G02B 27/01, G02B 5/30

(54) **INCOUPLER WITH POLARIZATION DEPENDENT DIFFRACTION EFFICIENCY**
EINKOPPLER MIT POLARISATIONSABHÄNGIGER DIFFRAKTIONSEFFIZIENZ
INCOUPLER À EFFICACITÉ DE DIFFRACTION DÉPENDANTE DE LA POLARISATION

(43) Date of publication of application: 10.12.2025
(73) Proprietor: Google LLC, Mountain View, CA 94043 (US)
(72) Inventor: HOEKMAN, Thomas, Mountain View, California 94043 (US)
(74) Representative: Maikowski & Ninnemann Patentanwälte Partnerschaft mbB
(86) International application number: PCT/US2023/014346
(87) International publication number: WO 2024/181981

(56) References cited:
- US-A- 6 072 629
- US-A1- 2012 281 280
- US-A1- 2022 137 411

## Description

### BACKGROUND

An optical combiner is an optical apparatus that combines light from multiple sources such as environmental light from outside of the optical combiner and display light emitted from an image source such as a micro-display (also referred to as a projector or a light engine) that is directed to the optical combiner via a waveguide. Optical combiners are used in eyewear displays and allow a user to view computer-generated content (e.g., text, images, or video content) superimposed over the user's environment viewed through the eyewear display, creating what is known as augmented reality (AR) or mixed reality (MR).

In an eyewear display, display light beams from the light engine are initially coupled into the waveguide by an input optical coupling (referred to as an "incoupler") which can be formed as an optical grating on a surface, or multiple surfaces, of the waveguide or disposed within the waveguide. Once the display light beams have been coupled into the waveguide, the incoupled display light beams are "guided" through the waveguide, typically by multiple instances of total internal reflection (TIR), to then be directed out of the waveguide by an output optical coupling (referred to as an "outcoupler"), which can also be formed as an optical grating on or within the waveguide. The outcoupled display light beams overlap at an eye relief distance from the waveguide forming an exit pupil within which a virtual image generated by the light engine can be viewed by the user of the eyewear display.

In eyewear display and waveguide design, there is a demand to increase the waveguide's capacity to transmit display light from the light engine to the user as well as a demand to reduce the waveguide's weight and volume. These two demands often conflict with one another. For example, increasing the waveguide thickness generally improves the waveguide's capacity to transmit display light from the light engine to the user, but this improvement comes at the cost of increasing the volume and weight of the waveguide. On the other hand, reducing the thickness of the waveguide to reduce the waveguide's volume and weight diminishes the waveguide's capacity to transmit display light from the light engine to the user since it generally decreases the waveguide's incoupling efficiency, where the incoupling efficiency is defined as the ratio of display light that is incoupled and propagated within the waveguide past the region occupied by the incoupler to the total amount of display light incident on the incoupler. In terms of display light beam paths, one of the mechanisms that reduces the incoupling efficiency is a "multi-bounce" mechanism, where a display light beam that has already been incoupled into the waveguide interacts with, or "bounces" on, the incoupler a subsequent time. In conventional waveguides, this subsequent interaction results in the display light beam being prematurely extracted from the waveguide within the region occupied by the incoupler at a high rate. US 2022 / 0 137 411 A1 discloses a waveguide display including a substrate transparent to visible light, a first grating on the substrate and configured to couple display light into or out of the substrate, and a phase structure on the substrate and configured to change a polarization state of the display light after or before the display light reaches the first grating. The first grating has a polarization-dependent diffraction efficiency. US 2012 / 0 281 280 A1 discloses a birefringent device, which is configured to be mounted in an optical path of an optical system, which has an effective area in a pupil plane. The birefringent device affects different polarization states differently and position-dependently. The birefringent device realizes a first pupil function assigned to a first polarization state and a second different pupil function assigned to a second polarization state. The pupil functions may be optimized to achieve various specific optical properties like extended depth of field. US 6,072,629 A discloses a light polarizer which includes a plurality of discrete layers of birefringent film disposed in superposed relation on a transparent substrate. The planar components of the optic axes of each successive one of the discrete layers are angularly offset relative each preceding one of the discrete layers by a predetermined angle in one or either a positive or negative direction to provide the light polarizer with selectivity for either right-handed circularly polarized (RHCP) or left-handed circularly polarized (LHCP) incident light.

### SUMMARY

A claimed solution is specified by an apparatus according to claim 1, by a method according to claim 13 and by a device according to claim 15. Dependent claims specify embodiments thereof. In a first embodiment, an apparatus includes a polarization gradient layer to convert a portion of light having a first polarization state to light having a second polarization state, and a waveguide including an incoupler to incouple light having the first polarization state at a first diffraction efficiency and light having the second polarization state at a second diffraction efficiency, wherein the second diffraction efficiency is different than the first diffraction efficiency.

In some aspects of the first embodiment, the polarization gradient layer includes a polarization conversion gradient structure for converting light from the first polarization state to the second polarization state at varying conversion rates. In some aspects, the polarization gradient layer converts a first proportion of light having the first polarization state to light having the second polarization state at a first point along the polarization conversion gradient structure and converts a second proportion of light having the first polarization state to light having the second polarization state at a second point along the polarization conversion gradient structure, wherein the first proportion and the second proportion are different. In some aspects, the first point is on a first edge of the polarization gradient layer and the second point is on a second edge of the polarization gradient layer, wherein the second edge is opposite to the first edge. In some aspects, the first proportion is zero, which indicates that no light having the first polarization state is converted to light having the second polarization state.

In some aspects, the incoupler includes an incoupler grating having a diffraction efficiency that is polarization dependent and ranges from the first diffraction efficiency to the second diffraction efficiency. In some aspects, the incoupler grating includes grating features including a slant angle and a grating height. In some aspects, the incoupler is aligned with the polarization gradient layer such that light having the first polarization state is incident on the incoupler near a first edge of the incoupler along an incoupling direction and such that light having the second polarization state is incident on the incoupler near a second edge of the incoupler opposite to the incoupling direction.

In some aspects, the polarization conversion gradient structure comprises a liquid crystal layer. For example, the liquid crystal layer includes one or more of the following: an electric field that varies along a length of the polarization gradient layer, a thickness that varies along a length of the polarization gradient layer, or a retardance that varies along a length of the polarization gradient layer.

In some aspects, the polarization conversion gradient structure includes a polymer retarder layer with a variable thickness along a length of the polarization gradient layer.

In some aspects, the polarization conversion gradient structure includes a birefringent crystal layer with a variable thickness along a length of the polarization gradient layer. In some aspects, the birefringent crystal layer includes a dielectric material or a glass.

In some aspects, the polarization conversion gradient structure includes a subwavelength plate including a grating that varies along a length of the polarization gradient layer.

In another embodiment, an apparatus includes a light engine to emit light having a first polarization state, a polarization gradient layer to convert a portion of the light having a first polarization state to light having a second polarization state, and a waveguide including an incoupler to incouple light having the first polarization state at a first diffraction efficiency and light having the second polarization state at a second diffraction efficiency, wherein the second diffraction efficiency is different than the first diffraction efficiency.

In some aspects, the polarization gradient layer includes a polarization conversion gradient structure for converting light from the first polarization state to the second polarization state at varying rates, where the polarization gradient layer converts a first proportion of light having the first polarization state to light having the second polarization state at a first point along the polarization conversion gradient structure and converts a second proportion of light having the first polarization state to light having the second polarization state at a second point along the polarization conversion gradient structure. In some aspects, the first proportion and the second proportion are different. In some aspects, the first point is on a first edge of the polarization gradient layer and the second point is on a second edge of the polarization gradient layer opposite to the first edge. In some aspects, the incoupler includes an incoupler grating whose diffraction efficiency is polarization dependent and ranges from the first diffraction efficiency to the second diffraction efficiency, and the incoupler is aligned with the polarization gradient layer such that light having the first polarization state is incident on the incoupler near a first edge of the incoupler along an incoupling direction.

In another embodiment, a method to incouple light into a waveguide of an eyewear display includes receiving light having a first polarization state at a polarization gradient layer, converting, at the polarization gradient layer, a portion of the light having the first polarization state to light having a second polarization state such that light exiting the polarization gradient layer comprises a polarization gradient ranging from light having the first polarization state to light having an increased proportion of the second polarization state, and incoupling, via an incoupler, the light exiting the polarization gradient layer into the waveguide.

In some aspects, the method includes generating and transmitting, at a light engine, the light having the first polarization state to the polarization gradient layer. In some aspects, the incoupler includes an incoupler grating having a first diffraction efficiency for light having the first polarization state and a second diffraction efficiency for light having the second polarization state, wherein the second diffraction efficiency is different than the first diffraction efficiency.

In another embodiment, a device implements the method according to any one of the embodiments described above.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 shows an example eyewear display in accordance with some embodiments.
FIG. 2 shows an example of a projection system with a polarization gradient layer arranged between the light engine and an incoupler of a waveguide of an eyewear display, such as that shown in FIG. 1, in accordance with some embodiments.
FIG. 3 shows an example of light propagation within a waveguide of a projection system, such as the projection system of FIG. 2, in accordance with some embodiments.
FIG. 4 shows light propagation from a light engine to a user in an eyewear display, such as that of FIGs. 1 and 2, in accordance with some embodiments.
FIG. 5 shows an incoupler configuration illustrating the path of propagation for light beams within an incoupler region of a waveguide, such as the waveguide of FIGs. 2-4, in accordance with some embodiments.
FIG. 6 shows different areas of an incoupler with the number of interactions (n) a light beam will experience with the incoupler based on its initial position of incidence on the incoupler, such as the incoupler of FIG. 5, in accordance with some embodiments.
FIG. 7 shows two graphs illustrating the relationship between the number of interactions (n) with the incoupler, incoupler diffraction efficiency, and the incoupler incoupling efficiency, in accordance with some embodiments.
FIG. 8 shows a portion of an incoupler, such as the incoupler of FIGs. 2-6, with slanted grating features and with a diffraction efficiency that is polarization dependent, in accordance with some embodiments.
FIG. 9 shows a configuration of a light engine, a polarization gradient layer, and an incoupler, such as those shown in FIGs. 2 and 4, in accordance with some embodiments.
FIG. 10 shows an alignment configuration of an incoupler with a polarization gradient layer, such as those shown in FIG. 9, in accordance with some embodiments.
FIG. 11 shows a method flowchart for incoupling display light having different polarization states into a waveguide depending on the position of incidence on the incoupler, in accordance with some embodiments.

### DETAILED DESCRIPTION

In some cases, conventional waveguides attempt to increase incoupling efficiency by increasing the incoupler's diffraction efficiency, where the incoupler's diffraction efficiency is defined as the ratio of light that is diffracted toward a designated direction after interacting with the incoupler compared to the amount of light incident on the incoupler. This designated direction is often characterized by the TIR properties of the waveguide and, for a display light beam's initial interaction with the incoupler, corresponds with an incoupling direction that defines the display light beam's path of propagation within the waveguide (typically toward an exit pupil expander or an outcoupler). While a higher incoupler diffraction efficiency may at first appear to increase a waveguide's capacity to transmit display light from the light engine to the user since a higher ratio of display light beams are initially incoupled into the waveguide, it also results in a higher amount of already-incoupled display light beams being prematurely extracted from the waveguide for those display light beams whose paths of propagation within the waveguide involve subsequent interactions (i.e., "bounces") with the incoupler. In particular, display light beams incoupled into the waveguide at the farthest edge of the incoupler with respect to the incoupling direction are subject to multiple interactions with, or bounces on, the incoupler. These display light beams are more likely to be extracted from the waveguide during these "multibounce" events, thereby reducing the amount of display light that is propagated toward the outcoupler.

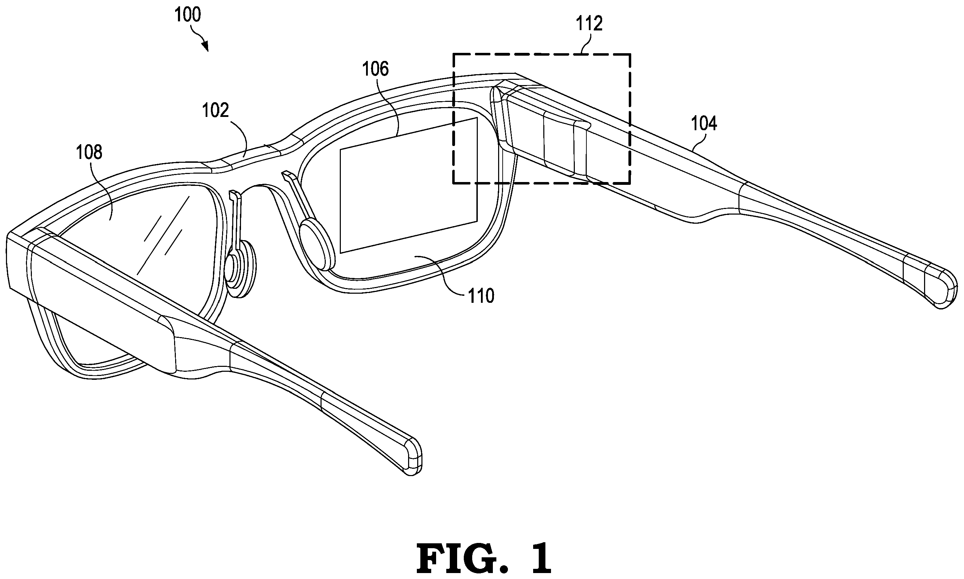

FIGs. 1-11 illustrate techniques to improve the incoupling efficiency by implementing an incoupler with grating features having a diffraction efficiency that varies depending on the polarization state of light incident thereon and by introducing a polarization gradient layer between the incoupler and the light engine that modulates the polarization state of the display light as a function of the display light's position of incidence on the incoupler. Using the techniques described herein, the incoupling efficiency of the waveguide is improved by reducing the losses attributed to "multi-bounce" events, thereby increasing the amount of display light that is delivered to the user. However, it will be appreciated that the apparatuses and techniques of the present disclosure are not limited to implementation in this particular display system or method, but instead may be implemented in any of a variety of display systems using the guidelines provided herein.

To illustrate, in some embodiments, an eyewear display includes a light engine to emit light having a first polarization state (e.g., s-polarized light). The eyewear display also includes a polarization gradient layer that receives the light emitted from the light engine and converts a portion of the light having the first polarization state to light having a second polarization state (e.g., p-polarized light). In some embodiments, the polarization gradient layer converts light having the first polarization state to light having the second polarization state at variable rates along a first direction of the polarization gradient layer. That is, at one end of the polarization gradient layer, little or no light having the first polarization state is converted to light having the second polarization state, and at the opposite end of the polarization gradient layer, a higher amount (or in some cases, all) of the light having the first polarization state is converted to light having the second polarization state. Accordingly, after passing through the polarization gradient layer, the light ranges from light having the first polarization state to light having a higher proportion of the second polarization state along the first direction. The eyewear display also includes a waveguide with an incoupler that receives light after it passes through the polarization gradient layer. In some embodiments, the incoupler includes an incoupler grating that has a higher diffraction efficiency for light having the first polarization state and a lower diffraction efficiency for light having the second polarization state. The incoupler is aligned with the polarization gradient layer such that light with the first polarization state is incident near a first edge of the incoupler in the incoupling direction and light having the higher proportion of the second polarization state is near a second edge of the incoupler farthest from the incoupling direction. As such, incoupled light beams whose incoupling paths involve a small number of interactions (e.g., 1 interaction) with the incoupler experience a high diffraction efficiency and incoupled light beams whose incoupling paths involve a larger number of interactions (e.g., 2 or more) with the incoupler experience a lower diffraction efficiency. This increases the overall incoupling efficiency of the incoupler since less light is prematurely extracted from the waveguide for light paths experiencing "multi-bounce" events, thereby improving the waveguide's capacity to transmit display light to the user without needing to increase the thickness of the waveguide.

To further illustrate, for a given incoupler and waveguide geometry and incoupling direction, the number of times a display light beam will interact with the incoupler depends on the position at which it was initially incident on and incoupled by the incoupler into the waveguide. The closer this initial interaction is to the first edge of the incoupler in the incoupling direction, the fewer interactions the display light beam will experience with respect to the incoupler, thus increasing the likelihood that the display light beam will make it past the incoupler for further propagation within the waveguide. For example, display light beams that are incoupled at or near the first edge of the incoupler in the direction closest to the incoupling direction will interact with the incoupler a single time. On the other hand, display light beams that are incoupled at the opposite edge of the incoupler (i.e., farthest away from the incoupling direction) will likely experience one or more subsequent interactions with, or bounces on, the incoupler and thus have a higher chance of being prematurely extracted from the waveguide by the incoupler during these "multi-bounce" events. The techniques provided herein modulate the polarization of display light incident on the incoupler as a function of the display light's initial position of incidence on the incoupler and, by employing an incoupler with a polarization selective diffraction efficiency, increase the amount of incoupled light that is eventually forwarded to the outcoupler by reducing the amount of display light that is prematurely extracted during the "multi-bounce" events.

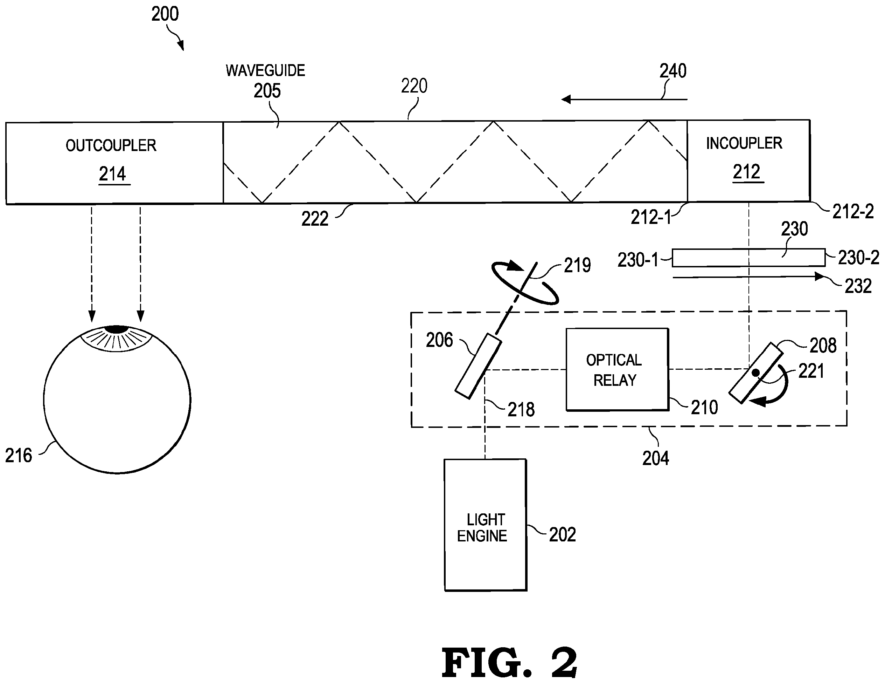

FIG. 1 illustrates an example eyewear display 100 in accordance with various embodiments. The eyewear display 100 (also referred to as a wearable heads up display (WHUD), head-mounted display (HMD), near-eye display, or the like) has a support structure 102 that includes an arm 104, which houses a micro-display projection system configured to project images toward the eye of a user, such that the user perceives the projected images as being displayed in a field of view (FOV) area 106 of a display at one or both of lens elements 108, 110. In the depicted embodiment, the support structure 102 of the eyewear display 100 is configured to be worn on the head of a user and has a general shape and appearance (i.e., "form factor") of an eyeglasses frame. The support structure 102 contains or otherwise includes various components to facilitate the projection of such images toward the eye of the user, such as a light engine and a waveguide (shown in FIG. 2, for example). In some embodiments, the support structure 102 further includes various sensors, such as one or more front-facing cameras, rear-facing cameras, other light sensors, motion sensors, accelerometers, and the like. The support structure 102 further can include one or more radio frequency (RF) interfaces or other wireless interfaces, such as a Bluetooth^{™} interface, a WiFi interface, and the like. Further, in some embodiments, the support structure 102 includes one or more batteries or other portable power sources for supplying power to the electrical components of the eyewear display 100. In some embodiments, some or all of these components of the eyewear display 100 are fully or partially contained within an inner volume of support structure 102, such as within the arm 104 in region 112 of the support structure 102. It should be noted that while an example form factor is depicted, it will be appreciated that in other embodiments the eyewear display 100 may have a different shape and appearance from the eyeglasses frame depicted in FIG. 1.

One or both of the lens elements 108, 110 are used by the eyewear display 100 to provide an augmented reality (AR) or mixed reality (MR) display in which rendered graphical content can be superimposed over or otherwise provided in conjunction with a real-world view as perceived by the user through the lens elements 108, 110. In some embodiments, one or both of lens elements 108, 110 serve as optical combiners that combine environmental light (also referred to as ambient light) from outside of the eyewear display 100 and light emitted from a light engine in the eyewear display 100. For example, light used to form a perceptible image or series of images may be projected by the light engine of the eyewear display 100 onto the eye of the user via a series of optical elements, such as a waveguide formed at least partially in the corresponding lens element, a polarization gradient layer, one or more scan mirrors, one or more optical relays, and/or one or more prisms. In some embodiments, the light engine is configured to emit light having a first polarization state toward the polarization gradient layer. As the light passes through the polarization gradient layer, a portion of the light having the first polarization state is converted to light having a second polarization state. As such, the light leaving the polarization gradient layer has a gradient of polarization states ranging from light having the first polarization state to light having an increased proportion of light with the second polarization state. An incoupler at the waveguide receives this light and incouples it into the waveguide. In some embodiments, the incoupler has a polarization-dependent diffraction efficiency that incouples light into the waveguide based on the polarization-state gradient applied by the polarization gradient layer. One or both of the lens elements 108, 110 thus includes at least a portion of a waveguide that routes display light received by the incoupler of the waveguide to an outcoupler of the waveguide, which outputs the display light toward an eye of a user of the eyewear display 100. The display light is modulated and projected onto the eye of the user such that the user perceives the display light as an image in FOV area 106. In addition, each of the lens elements 108, 110 is sufficiently transparent to allow a user to see through the lens elements to provide a field of view of the user's real-world environment such that the image appears superimposed over at least a portion of the real-world environment.

In some embodiments, the light engine is a digital light processing-based projector, a scanning laser projector, a liquid crystal on silicon (LCoS) light engine, or any combination of a modulative light source such as a laser or one or more light-emitting diodes (LEDs) or organic light-emitting diodes (OLEDs) located in region 112. In some embodiments, the light engine is configured to emit light of a first polarization state (e.g., s-polarized or p-polarized light). In some embodiments, the light engine includes multiple laser diodes (e.g., a red laser diode, a green laser diode, and/or a blue laser diode) and at least one scan mirror (e.g., two one-dimensional scan mirrors, which may be micro-electromechanical system (MEMS)-based or piezo-based). The light engine is communicatively coupled to the controller (not shown) and a non-transitory processor-readable storage medium or memory storing processor-executable instructions and other data that, when executed by the controller, cause the controller to control the operation of the light engine. In some embodiments, the controller controls a scan area size and scan area location for the light engine and is communicatively coupled to a light engine (not shown) that generates content to be displayed at the eyewear display 100. The light engine scans light over a variable area, designated the FOV area 106, of the eyewear display 100. The scan area size corresponds to the size of the FOV area 106, and the scan area location corresponds to a region of one of the lens elements 108, 110 at which the FOV area 106 is visible to the user. Generally, it is desirable for a display to have a wide FOV area 106 to accommodate the outcoupling of light across a wide range of angles.

As previously mentioned, a waveguide is integrated into one or both of lens elements 108, 110. In some embodiments, the waveguide includes a single waveguide substrate and in other embodiments, the waveguide includes multiple waveguide substrates stacked on top of one another (referred to as a waveguide stack). In some embodiments, the waveguide is separated from the light engine by a first distance that is restricted by the form factor of the eyewear display 100 and a polarization gradient layer is located within this first distance, i.e., between the waveguide and the light engine. The polarization gradient layer receives the light emitted from the light engine having a first polarization state and converts at least a portion of it to light having a second polarization state. In some embodiments, an incoupler on the waveguide includes an incoupler grating to incouple light having the first polarization state at a first diffraction efficiency and light having the second polarization state at a second diffraction efficiency, where the second diffraction efficiency is different (e.g., lower) than the first diffraction efficiency. In some aspects, the incoupler is aligned with the polarization gradient layer such that light with the first polarization state is incident on the incoupler at or near an edge of the incoupler that lies closest to the path of light propagation within the waveguide.

FIG. 2 illustrates a diagram of a projection system 200 that projects images onto the eye 216 of a user in accordance with various embodiments. The projection system 200, which may be implemented in the eyewear display 100 in FIG. 1, includes one or more of a light engine 202, an optical scanner 204, a polarization gradient layer 230, and/or a waveguide 205. In this example, the optical scanner 204 includes a first scan mirror 206, a second scan mirror 208, and an optical relay 210. The waveguide 205 includes one or more incouplers 212 and one or more outcouplers 214, with the outcoupler(s) 214 being optically aligned with an eye 216 of a user. For example, the outcoupler(s) 214 substantially overlap with the FOV area 106 shown in FIG. 1.

The light engine 202 includes one or more light sources configured to generate and project display light 218 (e.g., visible light such as red, blue, and green light and, in some embodiments, non-visible light such as infrared light). In some embodiments, the light engine 202 is coupled to a driver or other controller (not shown), which controls the timing of emission of display light from the light sources of the light engine 202 in accordance with instructions received by the controller or driver from a computer processor coupled thereto to modulate the display light 218 to be perceived as images when output to the retina of an eye 216 of a user. For example, during operation of the projection system 200, one or more beams of display light 218 are output by the light source(s) of the light engine 202 and then directed into the waveguide 205 before being directed to the eye 216 of the user. The light engine 202 modulates the respective intensities of the light beams so that the combined light reflects a series of pixels of an image, with the particular intensity of each light beam at any given point in time contributing to the amount of corresponding color content and brightness in the pixel being represented by the combined light at that time. In some embodiments, the light engine 202 is configured to emit display light 218 having a first polarization state. For example, the first polarization state is a linearly polarized light such as s-polarized or p-polarized light, or a circular polarized light such as clockwise circular polarized light or counterclockwise circular polarized light.

In some embodiments, the light engine 202 projects the display light 218 to an optical scanner 204. One or both of the scan mirrors 206 and 208 of the optical scanner 204 are MEMS mirrors in some embodiments. For example, the scan mirror 206 and the scan mirror 208 are MEMS mirrors that are driven by respective actuation voltages to oscillate during active operation of the projection system 200, causing the scan mirrors 206 and 208 to scan the light 218. Oscillation of the scan mirror 206 causes light 218 output by the optical engine 202 to be scanned through the optical relay 210 and across a surface of the second scan mirror 208. The second scan mirror 208 scans the light 218 received from the scan mirror 206 toward the incoupler 212 of the waveguide 205. In some embodiments, the scan mirror 206 oscillates along a first scanning axis 219, such that the light 218 is scanned in only one dimension (i.e., in a line) across the surface of the second scan mirror 208. In some embodiments, the scan mirror 208 oscillates or otherwise rotates along a second scanning axis 221. In some embodiments, the first scanning axis 219 is perpendicular to the second scanning axis 221.

In some embodiments, the optical relay 210 is a line-scan optical relay that receives the light 218 scanned in a first dimension by the first scan mirror 206 (e.g., the first dimension corresponding to the small dimension of the incoupler 212), routes the light 218 to the second scan mirror 208, and introduces a convergence to the light 218 in the first dimension to an exit pupil beyond the second scan mirror 208. Herein, an "exit pupil" in an optical system refers to the location along the optical path where beams of light intersect. For example, the possible optical paths of the light 218, following reflection by the first scan mirror 206, are initially spread along the first scanning axis, but later these paths intersect at an exit pupil beyond the second scan mirror 208 due to convergence introduced by the optical relay 210. For example, the width (i.e., smallest dimension) of a given exit pupil approximately corresponds to the diameter of the light corresponding to that exit pupil. Accordingly, the exit pupil can be considered a "virtual aperture." According to various embodiments, the optical relay 210 includes one or more collimation lenses that shape and focus the light 218 on the second scan mirror 208 or includes a molded reflective relay that includes two or more spherical, aspheric, parabolic, and/or freeform lenses that shape and direct the light 218 onto the second scan mirror 208. The second scan mirror 208 receives the light 218 and scans the light 218 in a second dimension, the second dimension corresponding to the long dimension of the incoupler 212 of the waveguide 205. In some embodiments, the second scan mirror 208 causes the exit pupil of the light 218 to be swept along a line along the second dimension.

In some embodiments, the light engine 202 projects display light 218 directly to the polarization gradient layer 230. That is, in some embodiments, the optical scanner 204 is absent from projection system 200. Accordingly, in such embodiments, the light engine 202 is arranged such that the optical path of the light 218 emitted from the light engine 202 is in line with the incoupler 212 and the polarization gradient layer 230 is arranged therebetween.

In some embodiments, the display light 218 emitted towards the incoupler 212 of the waveguide 205 from the light engine 202 is transmitted through polarization gradient layer 230. The polarization gradient layer 230, in some embodiments, is a liquid crystal layer, a polymer retarder layer, a birefringent crystal layer, or a subwavelength grating layer (subwavelength with respect to the wavelengths of light emitted by the display light) with varying polarization conversion rates along a first direction 232 of the polarization gradient layer. With reference to FIG. 2, at left side 230-1 of the polarization gradient layer 230, little or no light having the first polarization state is converted to light having the second polarization state, and at the right side 230-2 of the polarization gradient layer 230, a higher amount (or in some cases, all) of the light having the first polarization state is converted to light having the second polarization state. Thus, after passing through the polarization gradient layer 230, the display light 218 ranges from light having the first polarization state to light having a higher proportion of the second polarization state along the first direction 232 when it arrives at the incoupler 212. In some embodiments, the first polarization state and the second polarization state are orthogonal to one another.

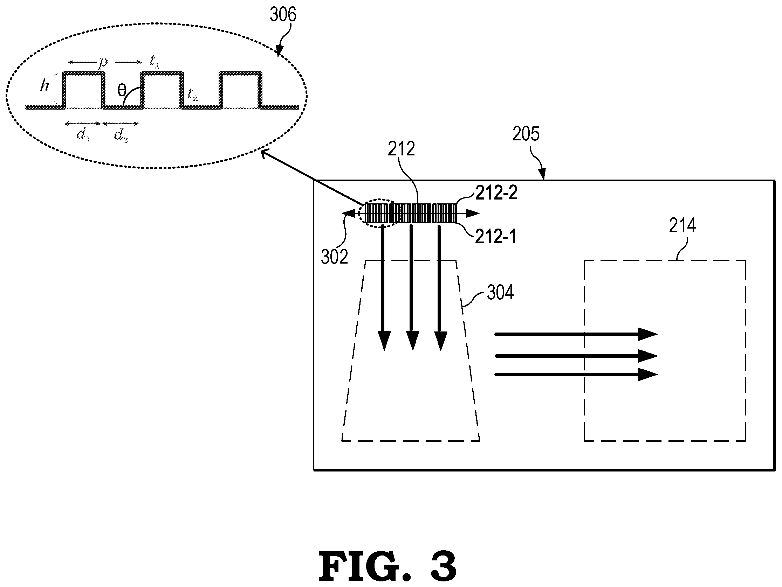

In some embodiments, the incoupler 212 has a rectangular profile and the incoupler 212 is configured to receive the display light 218 and direct the display light 218 into the waveguide 205. The incoupler 212 is defined by a smaller dimension (i.e., width) and a larger orthogonal dimension (i.e., length) with a first edge 212-1 that is closest to the incoupling direction 240 and a second edge 212-2 that is farthest from the incoupling direction 240. In some embodiments, the "incoupler region" is defined as the region of the waveguide 205 between the first edge 212-1 and the second edge 212-2 of the incoupler 212. In some aspects, the incoupling direction 240 is defined as the direction in which the incoupled light is propagated within the waveguide 205. In this manner, the waveguide 205 of the projection system 200 includes the incoupler 212 and the outcoupler 214. The term "waveguide," as used herein, will be understood to mean a combiner using one or more of total internal reflection (TIR), specialized filters, or reflective surfaces, to transfer light from an incoupler (such as incoupler 212) to an outcoupler (such as the outcoupler 214). In some display applications, the light is a collimated image, and the waveguide 205 transfers and replicates the collimated image to the eye. In general, the terms "incoupler" and "outcoupler" will be understood to refer to any type of optical grating structure, including, but not limited to, diffraction gratings, holograms, holographic optical elements (e.g., optical elements using one or more holograms), volume diffraction gratings, volume holograms, surface relief diffraction gratings, and/or surface relief holograms. In some embodiments, a given incoupler or outcoupler is configured as a transmissive grating (e.g., a transmissive diffraction grating or a transmissive holographic grating) that causes the incoupler or outcoupler to transmit light and to apply designed optical function(s) to the light during the transmission. In some embodiments, a given incoupler or outcoupler is a reflective grating (e.g., a reflective diffraction grating or a reflective holographic grating) that causes the incoupler or outcoupler to reflect light and to apply designed optical function(s) to the light during the reflection. In the present example, the light 218 received at the incoupler 212 is relayed to the outcoupler 214 via the waveguide 205 using TIR. A portion of the light 218 is then output to the eye 216 of a user via the outcoupler(s) 214. Also, in some embodiments, one or more exit pupil expanders (not shown), such as a fold grating, are arranged in an intermediate stage between incoupler 212 and outcoupler 214 to receive light that is coupled into waveguide 205 by the incoupler 212, expand the light in one dimension, and redirect the light towards the outcoupler 214, where the outcoupler 214 then couples the light out of waveguide 205. In some embodiments, the exit pupil expander and the outcoupler 214 are integrated into a common component (shown in architecture diagram 350 in FIG. 3). As described above, in some embodiments the waveguide 205 is implemented in an optical combiner as part of an eyeglass lens, such as the lens element 108, 110 (FIG. 1) of the display system having an eyeglass form factor and employing projection system 200.

The waveguide 205 further includes two major surfaces 220 and 222, with major surface 220 being world-side (i.e., the surface farthest from the user) and major surface 222 being eye-side (i.e., the surface closest to the user). In some embodiments, the waveguide 205 is between a world-side lens and an eye-side lens, which form lens elements 108, 110 shown in FIG. 1, for example. In some embodiments, the incoupler 212 and the outcoupler 214 are located, at least partially, at major surface 220. In another embodiment, the incoupler 212 and the outcoupler 214 are located, at least partially, at major surface 222. In further embodiments, the incoupler 212 is located at one of the major surfaces, while the outcoupler 214 are located at the other of the major surfaces.

FIG. 3 shows an example of light propagation within the waveguide 205 of the projection system 200 of FIG. 2. As shown, light is received via the incoupler 212, scanned along the axis 302, directed into an exit pupil expander (EPE) 304, and then routed to the outcoupler 214 to be output from the waveguide 205 (e.g., toward the eye of the user). In some embodiments, EPE 304 expands one or more dimensions of the eyebox of an eyewear display that includes the projection system 200 (e.g., with respect to what the dimensions of the eyebox of the eyewear display would be without the EPE 304). In some embodiments, the incoupler 212 and the EPE 304 each include respective one-dimensional diffraction gratings (i.e., diffraction gratings that extend along one dimension). It should be understood that FIG. 3 shows a case in which the incoupler 212 directs light straight down (with respect to the presently illustrated view) in a first direction that is perpendicular to the scanning axis 302, and the EPE 304 directs light to the right (with respect to the presently illustrated view) in a second direction that is perpendicular to the first direction. While not shown in the present example, it should be understood that, in some embodiments, the first direction in which the incoupler 212 directs light is slightly or substantially diagonal, rather than exactly perpendicular, with respect to the scanning axis 302.

Also shown in FIG. 3 is a cross-section 306 of the incoupler 212 illustrating features of the grating (also referred to as grating features) that can be configured to tune the efficiency of the incoupler 212. The period p of the grating is shown having two regions, with transmittances *t*1 and *t*2 and widths *d*1 and *d*2, respectively. The grating period is constant *p=d*1*+d*2, but the relative widths *d*1, *d*2 of the two regions may vary. In some embodiments, the relationship between the relative widths and the period is indicated by a fill factor such that *d*1=*xp* and *d*2=(1-*x*)*p.* In addition, while the profile shape of the grating features in cross-section 306 is generally shown as being square or rectangular with a height *h*, the shape can be modified based on the wavelength of light that the incoupler 212 is intended to receive. For example, in some embodiments, the shape of the grating features is triangular, rather than square, to create a more "saw-toothed" profile. In some embodiments, the incoupler 212 is configured as a grating with a constant period but different fill factors, heights, and slant angles (θ) based on the desired efficiency of the respective incoupler 212 or the desired efficiency of a region of the respective incoupler 212. Although shown as being at or near 90º in FIG. 3, in some embodiments, the slant angles (θ) can be acute or obtuse angles. For example, slanted or blazed gratings include slant angles (θ) other than 90º. In some embodiments, the grating features of the incoupler 212 are configured to incouple light having the first polarization state at a first diffraction efficiency and light having the second polarization state at a second diffraction efficiency. In some embodiments, the first diffraction efficiency is higher than the second diffraction efficiency.

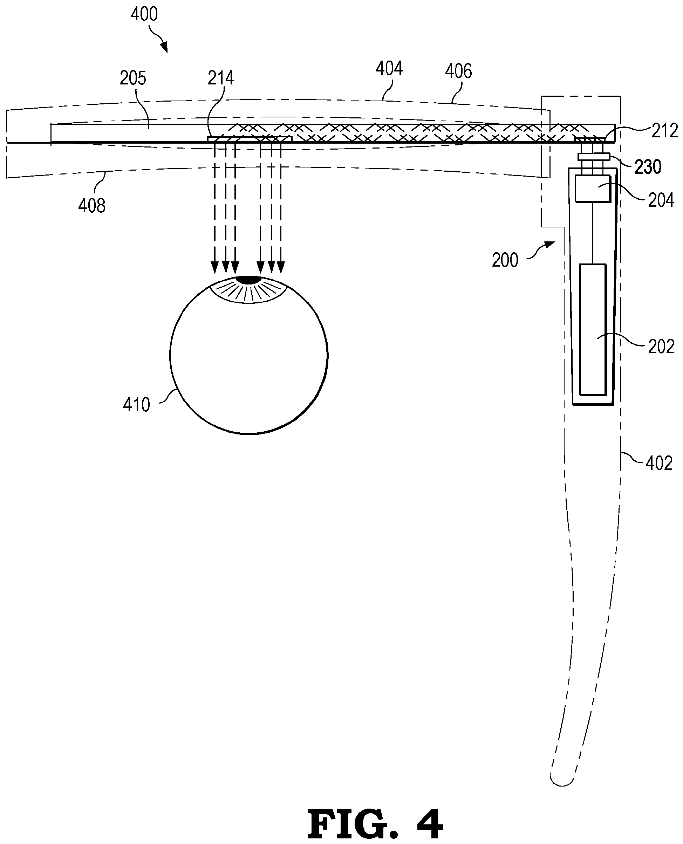

FIG. 4 illustrates a portion of an eyewear display 400 that includes the projection system 200 of FIG. 2 in accordance with various embodiments. In some embodiments, the eyewear display 400 represents the display 100 of FIG. 1 and includes the components of the projection system 200 of FIG. 2. The light engine 202, the optical scanner 204, the incoupler 212, the polarization gradient layer 230, and a portion of the waveguide 205 are included in an arm 402 of the eyewear display 400, in the present example.

The eyewear display 400 includes an optical combiner lens 404, which includes a first lens 406, a second lens 408, and the waveguide 205, with the waveguide 205 disposed between the first lens 406 and the second lens 408. Light exiting through the outcoupler 214 travels through the second lens 408 (which corresponds to, for example, the lens element 110 of the eyewear display 100). In use, the light exiting second lens 408 enters the pupil of an eye 410 of a user wearing the eyewear display 400, causing the user to perceive a displayed image carried by the laser light output by the light engine 202. The optical combiner lens 404 is substantially transparent, such that light from real-world scenes corresponding to the environment around the eyewear display 400 passes through the first lens 406, the second lens 408, and the waveguide 205 to the eye 410 of the user. In this way, images or other graphical content output by the projection system 200 are combined (e.g., overlayed) with real-world images of the user's environment when projected onto the eye 410 of the user to provide an AR experience to the user. The eyebox of eyewear display 400 corresponds to the region (or volume) in which the eye 410 of the user can perceive images associated with light projected from light engine 202.

In some embodiments additional optical elements are included in any of the optical paths between the light engine 202 and the incouplers 212, in between the incouplers 212 and the outcoupler(s) 214, and/or in between the outcoupler(s) 214 and the eye 410 of the user (e.g., in order to shape the display light from light engine 202 for viewing by the eye 410 of the user). As an example, the polarization gradient layer 230 is used to convert a portion of the display light from the light engine 202 having the first polarization state to light having a second polarization state to be incoupled at incoupler 212. In some embodiments, the polarization gradient layer 230 is located in the hinge of the eyewear display 400, and in other embodiments, it is located before the hinge of the eyewear display 400 (as shown in FIG. 4). In some embodiments, the grating features of the incoupler(s) 212 are designed such that the incoupler 212 receives light from the polarization gradient layer 230 and incouples it into the waveguide 205 at the appropriate angle to encourage propagation of the light in waveguide 205 by TIR.

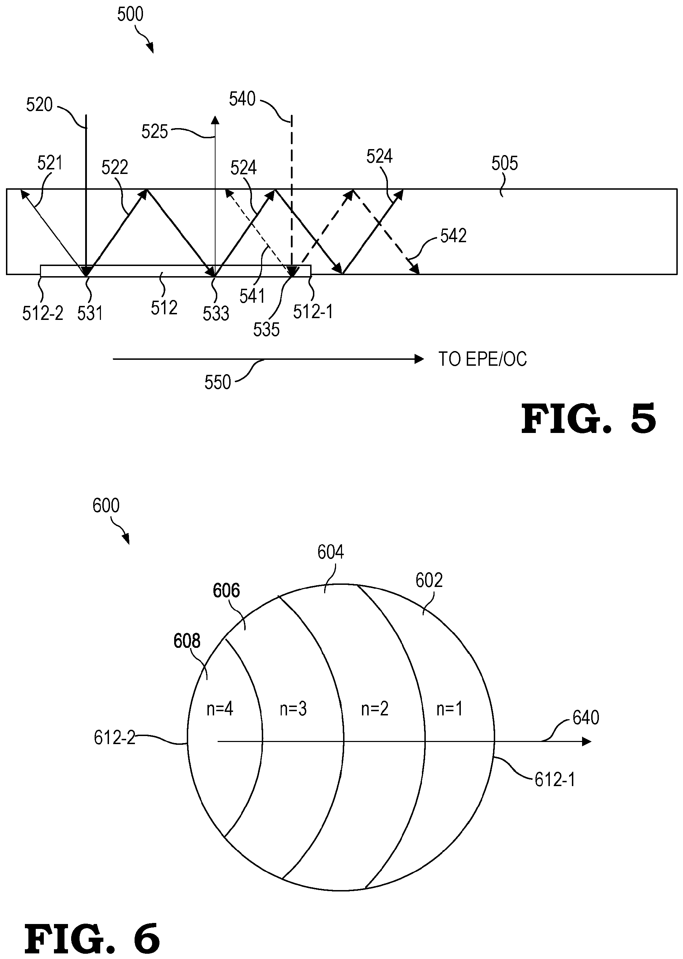

FIG. 5 shows a diagram 500 illustrating a side view of an incoupler configuration in accordance with some embodiments. Diagram 500 shows a portion of a waveguide 505, such as a waveguide corresponding to waveguide 205 of FIGs. 2-4, and an incoupler 512, such as an incoupler corresponding to incoupler 212 of FIGs. 2-4. It is appreciated although one incoupler configuration is shown in diagram 500, in other embodiments, the position or other aspects of the incoupler configuration are different. For example, while diagram 500 shows that the incoupler 512 is on the opposite surface of the waveguide 505 as the surface through which the display light beams 520 and 540 enter the waveguide 505, in some embodiments, the incoupler 512 is on the same surface of the waveguide 505 through which the display light beams 520 and 540 enter the waveguide.

The incoupler 512 includes a first edge 512-1 and a second edge 512-2. The first edge 512-1 is referred to as the incoupler edge closest to the incoupling direction 550 since it lies along the path of light propagation within the waveguide 505 toward the exit pupil expander (EPE) or the outcoupler (OC) (both not shown). The second edge 512-2 is referred to as the incoupler edge arranged opposite to or farthest from the incoupling direction 550 since it lies in the opposite direction of the path of light propagation within the waveguide 505 toward the EPE/OC. The region of the waveguide 505 between the first edge 512-1 and the second edge 512-2 is referred to as the incoupler region. In some embodiments, the incoupler 512 includes an incoupler grating whose grating features (such as those illustrated in 306 of FIG. 3) impart a diffraction efficiency that is dependent on the polarization state of the light incident thereon. In some aspects, the incoupler 512 includes a slanted grating with slant angles and a grating height that has a higher diffraction efficiency of light having a first polarization state (e.g., s-polarized light) and a lower diffraction efficiency of light having a second polarization state (e.g., p-polarized light). For example, the incoupler's diffraction efficiency for light having the first polarization state is 80% (or higher) and the incoupler's diffraction efficiency for light having the second polarization state is 50%.

In some cases, the display light received at the incoupler 512 is depicted as a plurality of display light beams. In diagram 500, two such display light beams are illustrated: display light beam 520 and display light beam 540. In some embodiments, the display light beams 520 and 540 are transmitted to the waveguide 505 from a light engine (not shown) and through a polarization gradient layer (not shown), such as polarization gradient layer 230 in FIGs. 2-4. The light engine emits display light having a first polarization state, and after passing through the polarization gradient layer, the display light ranges from light having a first polarization state to light having a second polarization state. For example, display light beam 540 has the first polarization state and display light beam 520 has the second polarization state.

Referring to display light beam 520 having the second polarization state, the display light beam 520 enters the waveguide 505 and interacts with the incoupler 512 at a first interaction (or first bounce) 531. At this point, an incoupled portion 522 (also referred to as the +1 order for the first interaction 531) of the display light beam 520 is diffracted in the incoupling direction 550 to be propagated within the waveguide 505 via TIR. A second portion 521 (also referred to as the -1 order for the first interaction 531) of the display light beam 520 is diffracted in the opposite direction and is lost. Thus, the diffraction efficiency of the incoupler 512 with respect to display light beam 520 is defined as the amount of light in the incoupled portion 522 divided by the amount of light in the display light beam 520. That is, the diffraction efficiency is the amount (or optical power) of light that is diffracted toward the direction of interest compared to the total amount (or optical power) of light incident at the incoupler. Since, in this example, the incoupler 512 has a diffraction efficiency of 50% for light having the second polarization state, 50% of the light in display light beam 520 having the second polarization state is diffracted into incoupled portion 522, which retains the second polarization state from display light beam 520.

As illustrated, the display light beam 520 having the second polarization state is incident near the second edge 512-2 of the incoupler 512 that is farthest from the incoupling direction 550. Therefore, in some cases, the light beam path for display light beam 520 (now identified as incoupled portion 522) interacts with the incoupler 512 a subsequent time at second interaction (or second bounce) 533. Since the diffraction efficiency of the incoupler 512 is 50% for light having the second polarization state, half of amount of light in the incoupled portion 522 is prematurely extracted from the waveguide 505 at second interaction 533 as extracted light 525, while the other remaining incoupled portion 524 is retained within the waveguide 505. In other words, 25% of the amount of light (e.g., based on the optical power) from display light beam 520 is left in remaining incoupled portion 524. As such, after exiting the incoupler region (the region of the waveguide 505 bound by the two edges 512-1 and 512-2 of the incoupler), the remaining incoupled portion 524 continues to be propagated within the waveguide 505 via TIR. The incoupling efficiency of the incoupler with respect to display light beam 520 is defined as the amount of light in the remaining light portion 524 divided by the amount of light in the display light beam 520. So, in this scenario, the incoupling efficiency for display light beams having the second polarization state and that experience two interactions (or bounces, illustrated at 531 and at 533) with the incoupler 512 is 25%.

Referring to display light beam 540, the display light beam 540 having the first polarization state enters the waveguide 505 and interacts with the incoupler 512 at a first interaction (or first bounce) 535. At this point, an incoupled portion 542 of the display light beam 540 is diffracted in the incoupling direction 550 to be propagated within the waveguide 505 via TIR. A second portion 541 of the display light beam 540 is diffracted in the opposite direction and is at least partially lost. In some embodiments, on the next interaction with the incoupler 512, a fraction of the second portion 541 is refracted back in the incoupling direction 550. Since the display light beam 540 is incoupled relatively close to the first edge 512-1 of the incoupler 512, it experiences only one interaction with the incoupler 512, i.e., first interaction 535. Based on the incoupler's 80% diffraction efficiency for light having the first polarization state and the light beam interacting with the incoupler only one time, 80% of the display light beam 540 is propagated past the incoupler region (region bound by edges 512-1 and 512-2) as incoupled portion 542. As such, in this scenario, the incoupling efficiency for display light beams having the first polarization state that experience one interaction (or bounce, illustrated at 535) with the incoupler is 80%. It is appreciated that this value for the diffraction efficiency is an example and may be other values (e.g., greater than 80%).

FIG. 5 shows an embodiment illustrating the first diffraction orders for each display light beam incident on the incoupler. That is, referring to display light beam 520, the +1 diffraction order is illustrated as incoupled portion 522 and the -1 diffraction order is illustrated as second portion 521. These first diffraction orders are illustrated for clarity purposes. In other embodiments, the number of diffraction orders is different. For example, in such embodiments and referring again to display light beam 520, one or more additional incoupled portions (e.g., a +2 diffraction order) are diffracted toward incoupling direction 550 along with incoupled portion 522 and/or one or more additional portions (e.g., a -2 diffraction order) are diffracted in the opposite direction of incoupling direction 550 along with second portion 521. Thus, in these configurations, the overall effect of the system remains largely the same based on the configuration shown in FIG. 5, albeit with respective changes to the overall incoupling efficiency and additional light beam paths to account for the additional diffraction orders.

In conventional waveguides, the diffraction efficiency of the incoupler is generally constant with respect to the display light beams incident thereon. That is, the diffraction efficiency of the incoupler for display light beams received near the first edge of the incoupler in the incoupling direction is the same as the diffraction efficiency of the incoupler for display light beams received near the second edge on the incoupler farthest from the incoupling direction. Therefore, while maximizing the diffraction efficiency increases the amount of light incoupled past the incoupler region for light beams that experience only one interaction with the incoupler, it also increases the amount of light that is prematurely extracted by the incoupler for those light beams whose propagation paths experience "multi-bounce" events on the incoupler. To illustrate, if the diffraction efficiency is 100%, then 100% of the display light beams incoupled near the first edge will be incoupled into the waveguide and propagated past the incoupler region. However, the quantity of light beams that experience only one interaction with the incoupler is relatively low, especially for thinner waveguides. For instance, as the thickness of the waveguide is reduced to minimize the weight and volume of the waveguide, a higher quantity of light beams will experience "multi-bounce" events. And, if the diffraction efficiency of the waveguide is 100% for light incident thereon, 100% of the display light beams that experience a "multi-bounce" event will be prematurely extracted from the waveguide at the subsequent interactions with the incoupler. This significantly reduces the waveguide's capacity to transmit light from the light engine to the user.

On the other hand, the techniques presented herein introduce a polarization gradient layer that modulates the polarization state of the light as a function of the light's position of incidence on the incoupler and an incoupler configuration whose diffraction efficiency varies based on the polarization state of light incident thereon. These techniques enable two factors that increase the amount of light incoupled into the waveguide past the incoupler region, thereby increasing the amount of light that is propagated to the outcoupler to be eventually outcoupled to the user. First, the incoupler has a high diffraction efficiency for light of a first polarization state that is incident near the first incoupler edge. This allows for a high amount of light with the first polarization state to be incoupled past the incoupler region since it only experiences the one, initial interaction with the incoupler. Second, the incoupler has a lower diffraction efficiency for light of a second polarization state for light that is incident farther from the first incoupler edge. This allows for a higher amount of this incoupled light with the second polarization state to be retained within the incoupler since not as much of it is extracted at subsequent interactions (i.e., during "multi-bounce" events) with the incoupler due to the incoupler's lower diffraction efficiency for light having the second polarization state. As a result, a higher amount of display light that is incident over the whole incoupler is retained within the waveguide and propagated toward the outcoupler. Accordingly, by employing an incoupler whose diffraction efficiency varies and corresponds to the number of interactions a light beam path will have with the incoupler, the overall incoupling efficiency of the waveguide is increased. This correlation between the number of interactions with the incoupler (referred to as "n"), the incoupler diffraction efficiency, and the incoupler incoupling efficiency is further illustrated in FIGs. 6-7.

In FIG. 6, an incoupler 600 is shown with an arrow 640 illustrating the incoupling direction in accordance with some embodiments. In this example, the incoupler 600 is shaped so that a cross-section of the incoupler 600 represents a circular shape. Incoupling direction 640 corresponds to the direction in which the display light beams incident on incoupler 600 are propagated with the waveguide (not shown). The incoupler 600 includes a first edge 612-1 arranged closest to the path of the incoupling direction 640 and a second edge 612-2 arranged farthest from the path of the incoupling direction 640. The number of interactions that a display light beam has with the incoupler is denoted at FIG. 6 as "n," where "n=1" corresponds to the display light beam having one interaction with the incoupler, "n=2" corresponds to the display light beam having two interactions with the incoupler, and so on. As shown in FIG. 6, the incoupler includes an n=1 area 602, an n=2 area 604, an n=3 area 606, and an n=4 area 608. Thus, display light incident in area 602 experiences the fewest number of interactions (only one) with the incoupler 600 and display light incident on area 608 experiences the highest number of interactions (in this case, four) with the incoupler 600. Accordingly, the incoupler 600 is designed with grating features such that display light that is initially incident on the n=1 area 602 has a maximum incoupling diffraction efficiency, display light that is initially incident on the n=2 area 604 has a 50% diffraction efficiency, display light that is initially incident on the n=3 area 606 has an approximately 33.3% diffraction efficiency, and display light initially incident on the n=4 area 608 has a 25% diffraction efficiency. In some aspects, this ensures that a higher amount of display light that is initially incident on each of the areas (i.e., areas 602-608) of the incoupler make it past the first edge 612-1 and is propagated within the waveguide toward the outcoupler after "multi-bounce" events are considered.

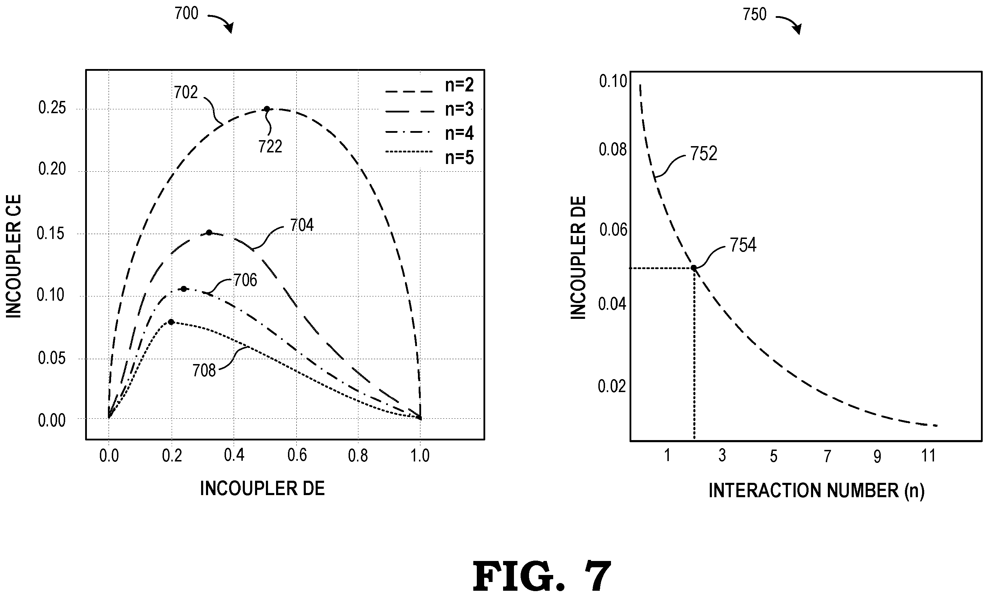

FIG. 7 shows two graphs 700 and 750 in accordance with some embodiments. Graph 700 shows the relationship between the incoupler diffraction efficiency (DE) and the incoupler incoupling efficiency (CE) based on the number of interactions (n) that a display light beam has with an incoupler, such as incoupler 600 illustrated in FIG. 6 or incoupler 512 illustrated in FIG. 5. The x-axis is the incoupler DE and ranges from 0.0 (corresponding to 0%) to 1.0 (corresponding to 100%). The y-axis is the incoupler CE and ranges from 0.0 (corresponding to 0%) to 1.0 (corresponding to 100%). Graph 750 shows the relationship between the incoupler DE on the y-axis, also ranging from 0.0 (or 0%) to 1.0 (or 100%), and the interaction number (n) on the x-axis.

In graph 700, line 702 corresponds to n=2, line 704 corresponds to n=3, line 706 corresponds to n=4, and line 708 corresponds to n=5. Referring to line 702, the optimal incoupling diffraction efficiency for a light beam path having two interactions with the incoupler (i.e., n=2) is 0.5 or 50%, and is indicated by point 722. At a diffraction efficiency of 1.0 (or 100%) the incoupler CE for a display light path with two interactions with the incoupler (n=2) is 0, or 0%. This is because although 100% of the display light beams are incoupled into the waveguide at the first interaction with the incoupler, at the second interaction, 100% of the incoupled beams are then prematurely extracted by the incoupler due to the 100% diffraction efficiency. On the other hand, if 50% of the display light beams are incoupled at the first interaction, then only 50% of the incoupled display light beams are prematurely extracted at the second interaction (e.g., as described in FIG. 5). Thus, 25% of the incoupled light beams make it past the incoupler region, resulting in an incoupler incoupling efficiency (CE) of 0.25, or 25%. Similar relationships are shown for the cases where n=3 at line 704, n=4 at line 706, and n=5 at line 708. The line for n=1 is not shown but it is understood that the line for a light beam path having a single interaction with the incoupler (n=1) would be illustrated as a straight line with a slope of 1 since the incoupler CE is for such a scenario is equal to the incoupler DE. Accordingly, in some embodiments, the diffraction efficiency for light having one interaction (n=1) with the incoupler is maximized to the highest incoupler DE achievable.

In graph 750, line 752 shows the ideal incoupler DE as a function of on the number of interactions (n) that the light beam path is involved in with the incoupler. In other words, line 752 corresponds to the maximum values indicated for each of the lines shown in graph 750. For example, point 754 corresponds to point 722 in graph 700 and shows that the ideal incoupler DE for a light beam path having two interactions (n=2) with the incoupler is 0.5, or 50%.

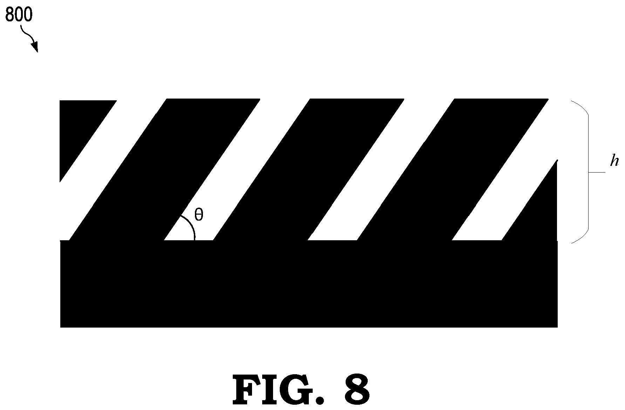

The present disclosure introduces an incoupler with incoupler grating features that have a high polarization selectivity to implement a polarization-dependent diffraction efficiency. For example, the incoupler is implemented with slanted grating features such as that shown in FIG. 8 to diffract s or p polarized light at different rates based on the slant angle (θ) and/or the height (h).

FIG. 8 shows a side view portion of an incoupler with a slanted grating 800. In some embodiments, the incoupler with the slanted grating 800 corresponds to the incoupler discussed in any one of FIGs. 2-6. In some embodiments, at a first slant angle (θ) and height (h), the slanted incoupler grating 800 has a higher diffraction efficiency for s-polarized light than it does for p-polarized light. Accordingly, a polarization gradient layer, such as polarization gradient layer 230 in FIGs. 2 or 4, is aligned with an incoupler with slanted grating 800 such that display light having an s-polarized state is incident on the incoupler near the first edge of the incoupler closer to the incoupling direction, and light having an increasing amount of p-polarized light is incident on the incoupler as the distance to the first edge increases.

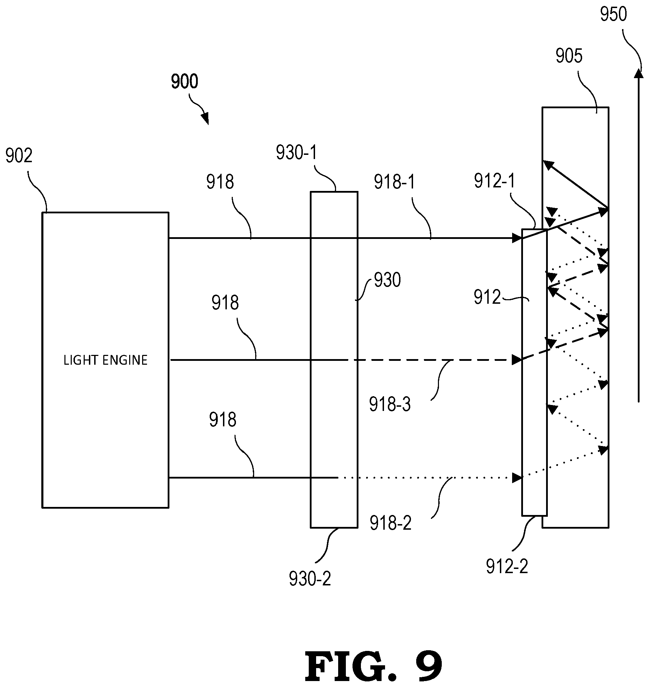

FIG. 9 shows an apparatus 900 with a light engine 902, a polarization gradient layer 930, and a waveguide 905 with an incoupler 912, in accordance with some embodiments. In some embodiments, the light engine 902 corresponds to the light engine shown FIGs. 2 and 4, the polarization gradient layer 930 corresponds to the polarization gradient layer shown in FIGs. 2 and 4, and incoupler 912 corresponds to the incoupler shown in FIGs. 2-6 and 8.

The light engine 902 is configured to emit display light 918 having a first polarization state. In some embodiments, the first polarization state is s-polarized light or p-polarized light. For purposes of this explanation, the display light 918 is described as being s-polarized light and is portrayed as three display light beams 918 with solid lines.

The polarization gradient layer 930 is arranged between the light engine 902 and the waveguide 905. In some embodiments, the polarization gradient layer 930 includes a polarization conversion gradient structure for converting light having the first polarization state (e.g., s-polarized light) to light having a second polarization state (e.g., p-polarized light) at varying rates along the length of the polarization gradient layer 930. For example, at or near a first edge 930-1 of the polarization gradient layer 930, the polarization conversion gradient structure converts little or no s-polarized light to p-polarized light. As such, the display light 918-1 leaving the polarization gradient layer 930 near the first edge 930-1 has a polarization state that is the same or mostly similar to the display light emitted from the light engine 902. In FIG. 9, this is shown by display light beam 918-1 having a solid line corresponding to the solid line for the light beams 918 being emitted from the light engine 902.

Near the second edge 930-2 of the polarization gradient layer 930, the polarization conversion gradient structure converts a high amount of the s-polarized light emitted from the light engine 902 to p-polarized light. As such, the display light 918-3 leaving the polarization gradient layer 930 near the second edge 930-2 has a high proportion of light having the second polarization state. In some embodiments, this includes polarization conversion gradient structure converting all of the s-polarized light emitted from the light engine 902 to p-polarized light. In FIG. 9, this is shown by the display light beam 918-3 leaving the polarization gradient layer 930 having a dotted line corresponding to p-polarized light.

In some aspects, in between the first edge 930-1 and the second edge 930-2, the polarization gradient layer converts an intermediate amount of the s-polarized light from the display light 918 emitted from the light engine 902 to p-polarized light. For example, 50% of the s-polarized light is converted to p-polarized light at a midpoint of the polarization gradient layer 930. As such, the display light 918-2 leaving the polarization gradient layer 930 in between the first edge 930-1 and the second edge 930-2 has a mixed amount of light having the s-polarization state and light having the p-polarization state. To illustrate, all or nearly all of the light in light beam 918-1 remains in the s-polarization state, all or nearly all of the light in light beam 918-2 is converted to light having the p-polarization state, and an intermediate amoung (e.g., half) of the light in light beam 918-3 is converted from light having the s-polarization state to light having the p-polarization state.

In some embodiments, the polarization conversion gradient structure in the polarization gradient layer 930 is a liquid crystal layer. In some aspects, a controller in the eyewear display (such as in eyewear display 100) applies a varying electric field to the liquid crystal layer to vary the polarization conversion rate as a function of the position between the first edge 930-1 or the second edge 930-2. For example, as the amount of electric potential to the liquid crystal layer is increased, the conversion rate of the polarization conversion gradient structure also increases. Thus, little or no electric potential is applied near the first edge 930-1 and a higher amount of electric potential is applied near the second edge 930-2. In another embodiment, the liquid crystal layer has a varying thickness that is proportional to the amount of light that is converted from one state to another. For example, the polarization gradient layer 930 is thinnest near the first edge 930-1, resulting in little or no light being converted, and thickest near the second edge 930-2, resulting in the highest amount of light being converted to the second polarization state. In another embodiment, the liquid crystal layer is cured with the desired conversion rates between the first edge 930-1 and the second edge 930-2.

In some embodiments, the polarization conversion gradient structure in the polarization gradient layer 930 is a polymer retardant layer with varying thickness between the first edge 930-1 and the second edge 930-2 that varies the conversion rate of light having the first polarization state to light having the second polarization state. In other embodiments, the polarization conversion gradient structure in the polarization gradient layer 930 is a birefringent crystal layer with varying thickness between the first edge 930-1 and the second edge 930-2 that varies the conversion rate of light having the first polarization state to light having the second polarization state. For example, the birefringent crystal layer is dielectric-based or glass-based. In still other embodiments, the polarization conversion gradient structure in the polarization gradient layer 930 is a subwavelength grating that is tuned to an effective index and orientation as a function of the position between the first edge 930-1 and the second edge 930-2. In this scenario, the term subwavelength refers to the wavelength of the light emitted from the light engine 902 so that it doesn't diffract the light emitted from the light engine 902.

The incoupler 912 is arranged to receive display light emitted from the light engine 902 after the display light passes through the polarization gradient layer 930. In some embodiments, the incoupler 912 includes a first edge 912-1 closest to the incoupling direction 950 and a second edge 912-2 farthest from the incoupling direction 950. The incoupler 912 includes incoupler grating features (e.g., slant angles or grating height) that impart a polarization dependent diffraction efficiency. That is, the incoupler 912 has a higher diffraction efficiency for light with a first polarization state such as s-polarized light and a lower diffraction efficiency for light with a second polarization state such as p-polarized light. In some aspects, the incoupler 912 is aligned with the polarization gradient layer 930 such that the first edge 912-1 of the incoupler 912 is closest to the first edge 930-1 of the polarization gradient layer 930 and the second edge 912-2 of the incoupler 912 is closest to the second edge 930-2 of the polarization gradient layer 930.

Accordingly, the display light beam 918-1 with s-polarized light is incident near the first edge 912-1 and the display light beam 918-3 with the p-polarized light is incident near the second edge 912-2. This increases the total amount of light that is incoupled past the first incoupler edge 912-1 since a lower amount of light incoupled farther away from the edge is prematurely extracted by the incoupler 912 at "multi-bounce" events due to the lower diffraction efficiency for light having a higher degree of the p-polarization state.

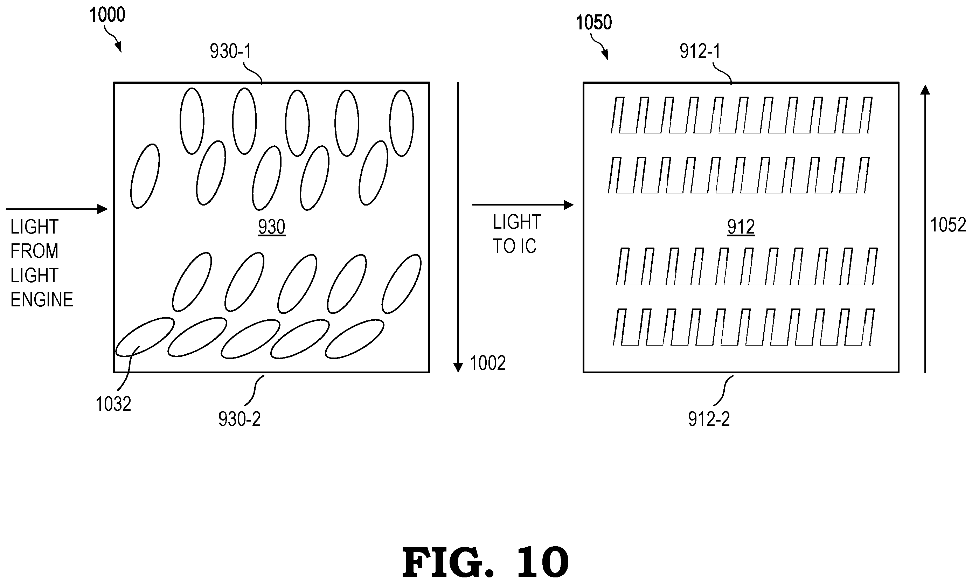

FIG. 10 shows an example alignment configuration of a polarization gradient layer 930 and the incoupler 912 shown in FIG. 9 in accordance with some embodiments. In the illustrated example, the polarization gradient layer 930 is illustrated as having a polarization conversion gradient structure that is a liquid crystal layer with a plurality of liquid crystals (one liquid crystal 1032 indicated for clarity purposes) whose polarization conversion rate increases as the orientation of the liquid crystal becomes more horizontal, i.e., shown by the increasingly horizontal orientation of the liquid crystals in the direction of arrow 1002. Accordingly, near the first edge 930-1 of the polarization gradient layer 930, the polarization conversion gradient structure converts little or no light from the first polarization state to the second polarization state. On the other hand, near the second edge 930-2 of the polarization gradient layer 930, the polarization conversion gradient structure has the highest conversion rate for light having the first polarization state to light having the second polarization state. For example, referring back to the example described in FIG. 9, the light exiting the polarization gradient layer 930 near the first edge 930-1 is mostly or all s-polarized light and light exiting the polarization gradient layer 930 near the second edge 930-2 is mostly or all p-polarized light.

The incoupler 912 is aligned such that the first incoupler edge 912-1 is aligned with or close to the first edge 930-1 of the polarization gradient layer 930 and the second edge 912-2 is aligned with or close to the second edge 930-2 of the polarization gradient layer 930. The incoupler 912 includes grating features that have a higher diffraction efficiency for light having a first polarization state and a lower diffraction efficiency for light having the second polarization state. For example, the incoupler's 912 grating features include a slanted grating that has a higher diffraction efficiency for s-polarized light and a lower diffraction efficiency for p-polarized light. Accordingly, a higher amount of the light incident near the first incoupler edge 912-1 is incoupled by the incoupler 912 into the waveguide (not shown) and a lower amount of light incident near the second incoupler edge 912-2 is incoupled by the incoupled 912 into the waveguide. This ensures that more of the light incoupled near the second edge 912-2 is not prematurely extracted by the incoupler 912 at subsequent interactions (i.e., at "multi-bounce" events) with the incoupler 912, thereby increasing the amount of light that is propagated within the waveguide to be outcoupled by the outcoupler.

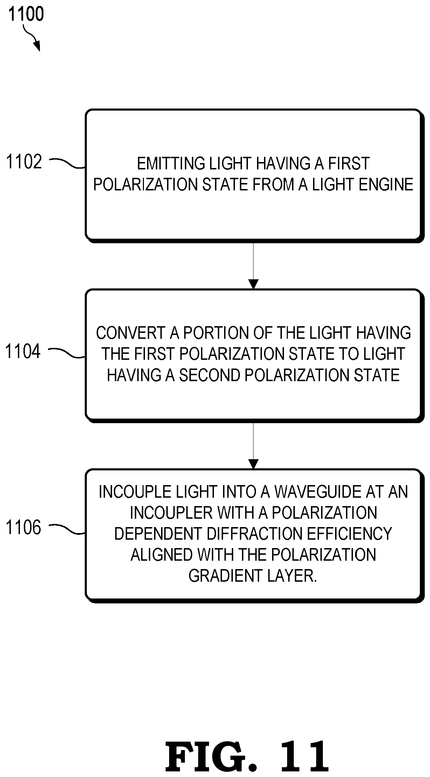

FIG. 11 shows a flow diagram of a method 1100 for incoupling display light having different polarization states into a waveguide depending on the position of incidence on the incoupler, in accordance with some embodiments. At 1102, the method includes a light engine (such as light engine 202 or 902) emitting light having a first polarization state. At 1104, the method includes a polarization gradient layer (such as polarization gradient layer 230 or 930) converting a portion of the light having the first polarization state to light having a second polarization state. In some embodiments, this results in light exiting the polarization gradient layer with a light polarization gradient ranging from light having the first polarization state to light having an increased proportion of the second polarization state. At 1106, the method includes incoupling the light exiting the polarization gradient layer into the waveguide at an incoupler. In some embodiments, the incoupler has a polarization dependent diffraction efficiency aligned with the polarization gradient layer. For example, in some embodiments, the incoupler includes grating features that diffract light having the first polarization state at a higher efficiency than light having the second polarization state.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. An apparatus comprising:
a polarization gradient layer (230; 930) to convert a portion of light having a first polarization state to light having a second polarization state; and
a waveguide (205; 505; 905) comprising an incoupler (212; 512; 600; 912) to incouple light having the first polarization state at a first diffraction efficiency and light having the second polarization state at a second diffraction efficiency, wherein the second diffraction efficiency is different than the first diffraction efficiency.

2. The apparatus of claim 1, wherein the polarization gradient layer (230; 930) comprises a polarization conversion gradient structure for converting light from the first polarization state to the second polarization state at varying conversion rates.

3. The apparatus of claim 2, wherein the polarization gradient layer (230; 930) converts a first proportion of light having the first polarization state to light having the second polarization state at a first point along the polarization conversion gradient structure and converts a second proportion of light having the first polarization state to light having the second polarization state at a second point along the polarization conversion gradient structure, wherein the first proportion and the second proportion are different.

4. The apparatus of claim 3, wherein the first point is on a first edge (212-1; 512-1; 612-1; 930-1) of the polarization gradient layer (230; 930) and the second point is on a second edge (212-2; 512-2; 612-2; 930-2) of the polarization gradient layer (230; 930), wherein the second edge (212-2; 512-2; 612-2; 930-2) is opposite to the first edge (212-1; 512-1; 612-1; 930-1), wherein optionally the first proportion is zero, indicating that no light having the first polarization state is converted to light having the second polarization state.

5. The apparatus of claim 2, wherein the incoupler (212; 512; 600; 912) comprises an incoupler grating having a diffraction efficiency that is polarization dependent and ranges from the first diffraction efficiency to the second diffraction efficiency.

6. The apparatus of claim 5, wherein the incoupler grating comprises grating features including a slant angle (θ) and a grating height (h).

7. The apparatus of claim 5, wherein the incoupler (212; 512; 600; 912) is aligned with the polarization gradient layer (230; 930) such that light having the first polarization state is incident on the incoupler (212; 512; 600; 912) near a first edge (212-1; 512-1; 612-1; 930-1) of the incoupler (212; 512; 600; 912) along an incoupling direction (240; 550; 640; 950; 550) and such that light having the second polarization state is incident on the incoupler (212; 512; 600; 912) near a second edge (212-2; 512-2; 612-2; 930-2) of the incoupler (212; 512; 600; 912) opposite to the incoupling direction (240; 550; 640; 950; 550).

8. The apparatus of claim 2, wherein the polarization conversion gradient structure comprises a liquid crystal layer, wherein optionally the liquid crystal layer comprises one or more of the following:
an electric field that varies along a length of the polarization gradient layer (230; 930);
a thickness that varies along a length of the polarization gradient layer (230; 930); or
a retardance that varies along a length of the polarization gradient layer (230; 930).

9. The apparatus of claim 2, wherein the polarization conversion gradient structure comprises a polymer retarder layer with a variable thickness along a length of the polarization gradient layer (230; 930).

10. The apparatus of claim 2, wherein the polarization conversion gradient structure comprises a birefringent crystal layer with a variable thickness along a length of the polarization gradient layer, wherein optionally the birefringent crystal layer comprises a dielectric material or a glass.

11. The apparatus of claim 2, wherein the polarization conversion gradient structure comprises a subwavelength plate comprising a grating that varies along a length of the polarization gradient layer (230; 930).

12. The apparatus of one of the preceding claims, further comprising:
a light engine (202; 902) to emit light having a first polarization state.

13. A method to incouple light into a waveguide (205; 505; 905) of an eyewear display (100; 400), the method comprising:
receiving light having a first polarization state at a polarization gradient layer (230; 930);
converting, at the polarization gradient layer (230; 930), a portion of the light having the first polarization state to light having a second polarization state such that light exiting the polarization gradient layer (230; 930) comprises a polarization gradient ranging from light having the first polarization state to light having an increased proportion of the second polarization state; and
incoupling, via an incoupler (212; 512; 600; 912), the light exiting the polarization gradient layer (230; 930) into the waveguide (205; 505; 905).

14. The method of claim 13, further comprising generating and transmitting, at a light engine (202; 902), the light having the first polarization state to the polarization gradient layer (230; 930), wherein optionally the incoupler (212; 512; 600; 912) comprises an incoupler grating having a first diffraction efficiency for light having the first polarization state and a second diffraction efficiency for light having the second polarization state, wherein the second diffraction efficiency is different than the first diffraction efficiency.

15. A device to implement the method of claim 13 or 14.

## Patentansprüche

1. Einrichtung, umfassend:
eine Polarisationsgradientenschicht (230; 930) zum Umwandeln eines Abschnitts von Licht, das einen ersten Polarisationszustand aufweist, in Licht, das einen zweiten Polarisationszustand aufweist; und
einen Wellenleiter (205; 505; 905), der einen Einkoppler (212; 512; 600; 912) zum Einkoppeln von Licht, das den ersten Polarisationszustand aufweist, bei einer ersten Diffraktionseffizienz und Licht, das den zweiten Polarisationszustand aufweist, bei einer zweiten Diffraktionseffizienz umfasst, wobei sich die zweite Diffraktionseffizienz von der ersten Diffraktionseffizienz unterscheidet.

2. Einrichtung nach Anspruch 1, wobei die Polarisationsgradientenschicht (230; 930) eine Polarisationsumwandlungsgradientenstruktur zum Umwandeln von Licht von dem ersten Polarisationszustand in den zweiten Polarisationszustand mit unterschiedlichen Umwandlungsraten umfasst.

3. Einrichtung nach Anspruch 2, wobei die Polarisationsgradientenschicht (230; 930) an einem ersten Punkt entlang der Polarisationsumwandlungsgradientenstruktur einen ersten Anteil des Lichts, das den ersten Polarisationszustand aufweist, in Licht umwandelt, das den zweiten Polarisationszustand aufweist, und an einem zweiten Punkt entlang der Polarisationsumwandlungsgradientenstruktur einen zweiten Anteil des Lichts, das den ersten Polarisationszustand aufweist, in Licht umwandelt, das den zweiten Polarisationszustand aufweist, wobei der erste Anteil und der zweite Anteil unterschiedlich sind.

4. Einrichtung nach Anspruch 3, wobei der erste Punkt sich auf einer ersten Kante (212-1; 512-1; 612-1; 930-1) der Polarisationsgradientenschicht (230; 930) befindet und der zweite Punkt sich auf einer zweiten Kante (212-2; 512-2; 612-2; 930-2) der Polarisationsgradientenschicht (230; 930) befindet, wobei die zweite Kante (212-2; 512-2; 612-2; 930-2) der ersten Kante (212-1; 512-1; 612-1; 930-1) gegenüberliegt, wobei optional der erste Anteil null ist, was anzeigt, dass kein Licht, das den ersten Polarisationszustand aufweist, in Licht umgewandelt wird, das den zweiten Polarisationszustand aufweist.

5. Einrichtung nach Anspruch 2, wobei der Einkoppler (212; 512; 600; 912) ein Einkopplergitter umfasst, das eine Diffraktionseffizienz aufweist, die polarisationsabhängig ist und von der ersten Diffraktionseffizienz bis zu der zweiten Diffraktionseffizienz reicht.

6. Einrichtung nach Anspruch 5, wobei das Einkopplergitter Gittermerkmale, einschließlich eines Neigungswinkels (θ) und einer Gitterhöhe (h), umfasst.

7. Einrichtung nach Anspruch 5, wobei der Einkoppler (212; 512; 600; 912) derart mit der Polarisationsgradientenschicht (230; 930) ausgerichtet ist, dass Licht, das den ersten Polarisationszustand aufweist, nahe einer ersten Kante (212-1; 512-1; 612-1; 930-1) des Einkopplers (212; 512; 600; 912) entlang einer Einkopplungsrichtung (240; 550; 640; 950; 550) auf den Einkoppler (212; 512; 600; 912) trifft, und derart, dass Licht, das den zweiten Polarisationszustand aufweist, nahe einer zweiten Kante (212-2; 512-2; 612-2; 930-2) des Einkopplers (212; 512; 600; 912) entgegengesetzt zu der Einkopplungsrichtung (240; 550; 640; 950; 550) auf den Einkoppler (212; 512; 600; 912) trifft.

8. Einrichtung nach Anspruch 2, wobei die Polarisationsumwandlungsgradientenstruktur eine Flüssigkristallschicht umfasst, wobei optional die Flüssigkristallschicht eines oder mehrere von Folgenden umfasst:
ein elektrisches Feld, das entlang einer Länge der Polarisationsgradientenschicht (230; 930) variiert;
eine Dicke, die entlang einer Länge der Polarisationsgradientenschicht (230; 930) variiert; oder
eine Verzögerung, die entlang einer Länge der Polarisationsgradientenschicht (230; 930) variiert.

9. Einrichtung nach Anspruch 2, wobei die Polarisationsumwandlungsgradientenstruktur eine Polymerverzögerungsschicht mit variabler Dicke entlang einer Länge der Polarisationsgradientenschicht (230; 930) umfasst.

10. Einrichtung nach Anspruch 2, wobei die Polarisationsumwandlungsgradientenstruktur eine doppelbrechende Kristallschicht mit variabler Dicke entlang einer Länge der Polarisationsgradientenschicht umfasst, wobei optional die doppelbrechende Kristallschicht ein dielektrisches Material oder ein Glas umfasst.

11. Einrichtung nach Anspruch 2, wobei die Polarisationsumwandlungsgradientenstruktur eine Subwellenlängenplatte umfasst, die ein Gitter umfasst, das entlang einer Länge der Polarisationsgradientenschicht (230; 930) variiert.

12. Einrichtung nach einem der vorhergehenden Ansprüche, ferner umfassend:
eine Light-Engine (202; 902) zum Emittieren von Licht, das einen ersten Polarisationszustand aufweist.

13. Verfahren zum Einkoppeln von Licht in einen Wellenleiter (205; 505; 905) einer Brillenanzeige (100; 400), wobei das Verfahren Folgendes umfasst:
Empfangen von Licht, das einen ersten Polarisationszustand aufweist, an einer Polarisationsgradientenschicht (230; 930);
Umwandeln eines Abschnitts des Lichts, das den ersten Polarisationszustand aufweist, an der Polarisationsgradientenschicht (230; 930) derart in Licht, das einen zweiten Polarisationszustand aufweist, dass das aus der Polarisationsgradientenschicht (230; 930) austretende Licht einen Polarisationsgradienten umfasst, der von Licht, das den ersten Polarisationszustand aufweist, bis zu Licht reicht, das einen erhöhten Anteil des zweiten Polarisationszustands aufweist; und
Einkoppeln des aus der Polarisationsgradientenschicht (230; 930) austretenden Lichts mittels eines Einkopplers (212; 512; 600; 912) in den Wellenleiter (205; 505; 905).

14. Verfahren nach Anspruch 13, ferner umfassend Erzeugen und Übertragen des Lichts, das den ersten Polarisationszustand aufweist, an einer Light-Engine (202; 902) auf die Polarisationsgradientenschicht (230; 930), wobei optional der Einkoppler (212; 512; 600; 912) ein Einkopplergitter umfasst, das eine erste Diffraktionseffizienz für Licht, das den ersten Polarisationszustand aufweist, und eine zweite Diffraktionseffizienz für Licht aufweist, das den zweiten Polarisationszustand aufweist, wobei sich die zweite Diffraktionseffizienz von der ersten Diffraktionseffizienz unterscheidet.

15. Vorrichtung zum Implementieren des Verfahrens nach Anspruch 13 oder 14.

## Revendications

1. Appareil comprenant :
une couche à gradient de polarisation (230 ; 930) afin de convertir une partie de la lumière ayant un premier état de polarisation en lumière ayant un second état de polarisation ; et
un guide d'ondes (205 ; 505 ; 905) comprenant un coupleur d'entrée (212 ; 512 ; 600 ; 912) afin de coupler la lumière ayant le premier état de polarisation à une première efficacité de diffraction et la lumière ayant le second état de polarisation à une seconde efficacité de diffraction, dans lequel la seconde efficacité de diffraction est différente de la première efficacité de diffraction.

2. Appareil selon la revendication 1, dans lequel la couche à gradient de polarisation (230 ; 930) comprend une structure à gradient de conversion de polarisation afin de convertir la lumière du premier état de polarisation au second état de polarisation à des taux de conversion variables.

3. Appareil selon la revendication 2, dans lequel la couche à gradient de polarisation (230 ; 930) convertit une première proportion de lumière ayant le premier état de polarisation en lumière ayant le second état de polarisation à un premier point le long de la structure à gradient de conversion de polarisation et convertit une seconde proportion de lumière ayant le premier état de polarisation en lumière ayant le second état de polarisation à un second point le long de la structure à gradient de conversion de polarisation, dans lequel la première proportion et la seconde proportion sont différentes.

4. Appareil selon la revendication 3, dans lequel le premier point se trouve sur un premier bord (212-1 ; 512-1 ; 612-1 ; 930-1) de la couche à gradient de polarisation (230 ; 930) et le second point se trouve sur un second bord (212-2 ; 512-2 ; 612-2 ; 930-2) de la couche à gradient de polarisation (230 ; 930), dans lequel le second bord (212-2 ; 512-2 ; 612-2 ; 930-2) est opposé au premier bord (212-1 ; 512-1 ; 612-1 ; 930-1), dans lequel la première proportion est éventuellement nulle, ce qui indique qu'aucune lumière ayant le premier état de polarisation n'est convertie en lumière ayant le second état de polarisation.

5. Appareil selon la revendication 2, dans lequel le coupleur d'entrée (212 ; 512 ; 600 ; 912) comprend un réseau de couplage d'entrée ayant une efficacité de diffraction qui dépend de la polarisation et qui varie de la première efficacité de diffraction à la seconde efficacité de diffraction.

6. Appareil selon la revendication 5, dans lequel le réseau de couplage d'entrée comprend des caractéristiques de réseau comportant un angle d'inclinaison (θ) et une hauteur de réseau (h).

7. Appareil selon la revendication 5, dans lequel le coupleur d'entrée (212 ; 512 ; 600 ; 912) est aligné avec la couche à gradient de polarisation (230 ; 930) de sorte que la lumière ayant le premier état de polarisation soit incidente sur le coupleur d'entrée (212 ; 512 ; 600 ; 912) près d'un premier bord (212-1 ; 512-1 ; 612-1 ; 930-1) du coupleur d'entrée (212 ; 512 ; 600 ; 912) le long d'une direction de couplage d'entrée (240 ; 550 ; 640 ; 950 ; 550) et de sorte que la lumière ayant le second état de polarisation soit incidente sur le coupleur d'entrée (212 ; 512 ; 600 ; 912) près d'un second bord (212-2 ; 512-2 ; 612-2 ; 930-2) du coupleur d'entrée (212 ; 512 ; 600 ; 912) opposé à la direction de couplage d'entrée (240 ; 550 ; 640 ; 950 ; 550).

8. Appareil selon la revendication 2, dans lequel la structure à gradient de conversion de polarisation comprend une couche de cristal liquide, dans lequel la couche de cristal liquide comprend éventuellement un ou plusieurs des éléments suivants :
un champ électrique qui varie le long d'une longueur de la couche de gradient de polarisation (230 ; 930) ;
une épaisseur qui varie le long d'une longueur de la couche à gradient de polarisation (230 ; 930) ; ou
une retardance qui varie le long d'une longueur de la couche de gradient de polarisation (230 ; 930).

9. Appareil selon la revendication 2, dans lequel la structure de gradient de conversion de polarisation comprend une couche retardatrice polymère d'épaisseur variable le long d'une longueur de la couche de gradient de polarisation (230 ; 930).

10. Appareil selon la revendication 2, dans lequel la structure de gradient de conversion de polarisation comprend une couche de cristal biréfringent d'épaisseur variable le long d'une longueur de la couche de gradient de polarisation, dans lequel la couche de cristal biréfringent comprend éventuellement un matériau diélectrique ou un verre.

11. Appareil selon la revendication 2, dans lequel la structure de gradient de conversion de polarisation comprend une plaque de sous-longueur d'onde comprenant un réseau qui varie le long d'une longueur de la couche de gradient de polarisation (230 ; 930).

12. Appareil selon l'une quelconque des revendications précédentes, comprenant en outre :
un moteur lumineux (202 ; 902) pour émettre de la lumière ayant un premier état de polarisation.

13. Procédé afin de coupler la lumière dans un guide d'ondes (205 ; 505 ; 905) d'un affichage de lunettes (100 ; 400), le procédé comprenant :
la réception de la lumière ayant un premier état de polarisation dans une couche à gradient de polarisation (230 ; 930) ;
la conversion, au niveau de la couche à gradient de polarisation (230 ; 930), d'une partie de la lumière ayant le premier état de polarisation en lumière ayant un second état de polarisation de sorte que la lumière sortant de la couche à gradient de polarisation (230 ; 930) comprend un gradient de polarisation allant de la lumière ayant le premier état de polarisation à la lumière ayant une proportion accrue du second état de polarisation ; et
le couplage, via un coupleur d'entrée (212 ; 512 ; 600 ; 912), de la lumière sortant de la couche de gradient de polarisation (230 ; 930) dans le guide d'ondes (205 ; 505 ; 905).

14. Procédé selon la revendication 13, comprenant en outre la génération et la transmission, au niveau d'un moteur lumineux (202 ; 902), de la lumière ayant le premier état de polarisation vers la couche à gradient de polarisation (230 ; 930), dans lequel le coupleur d'entrée (212 ; 512 ; 600 ; 912) comprend éventuellement un réseau de couplage d'entrée ayant une première efficacité de diffraction pour la lumière ayant le premier état de polarisation et une seconde efficacité de diffraction pour la lumière ayant le second état de polarisation, la seconde efficacité de diffraction étant différente de la première efficacité de diffraction.

15. Dispositif configuré pour mettre en œuvre le procédé selon la revendication 13 ou 14.
